(19) Europäisches Patentamt

European Patent Office

Office européen des brevets

(11) **EP 2 837 984 B1**

(12) # EUROPEAN PATENT SPECIFICATION

(45) Date of publication and mention
of the grant of the patent:
**22.05.2019  Bulletin 2019/21**

(51) Int Cl.:
***G05B 23/02*** *(2006.01)*

(21) Application number: **14179842.1**

(22) Date of filing: **05.08.2014**

(54) **Process to optimize the maintenance of technical systems**

Verfahren zum Optimieren der Wartung technischer Systeme

Procédé pour optimiser la maintenance de systèmes techniques

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **05.08.2013  AT 504912013**

(43) Date of publication of application:
**18.02.2015  Bulletin 2015/08**

(73) Proprietor: **UPTIME HOLDING GMBH
8010 Graz (AT)**

(72) Inventors:
• **HASELGRUBER, Nikolaus
4170 HASLACH (AT)**

• **LANGMAYR, Franz
8020 GRAZ (AT)**
• **GRAY, Christopher
8051 GRAZ (AT)**

(74) Representative: **Wirnsberger & Lerchbaum
Patentanwälte OG
Mühlgasse 3
8700 Leoben (AT)**

(56) References cited:
**WO-A1-2008/110742      WO-A2-2011/054005
US-A1- 2008 059 840      US-A1- 2011 196 593**

**Description**

Background

The standard approach to maintenance is based on scheduled actions or reactive, i.e. activity starts after a fault. This leads to high entailed costs and downtime due to unforeseen events. This motivates the demand for condition-based preventive maintenance.

Such an approach requires identification of maintenance activities to be performed in order to avoid faults. To this end it is necessary to detect deviations of system behaviour and diagnose the root cause for this observation.

Further prognosis of failure evolution is necessary for ranking of severity and organization of adequate counter-measures.

State of the art

Condition based maintenance demands a trigger for starting activities. The trigger is normally generated by identification of deviating system behaviour: state detection is based on measurement of system data (vibration measurement, SCADA (supervisory condition and data acquisition) and

- statistical analysis (time series, cross correlation)

- detection of threshold (pre-defined, hard-coded alarm limits) transition

- residual analysis of measured data vs. expectation values from damaged system state (Smart Signal)

Relevant patents

- WO 08/043762, Ecotecnica energias renovables deals with mechanical fatigue
  A control system based on sensor equipment and arrangement to measure wind turbine states and load.
  Objective: optimization of operation to minimize mechanical fatigue

- WO 09/053365, Ecotecnica energias renovables describes the evaluation of fatigue damage based on rainflow classification of torque cycles, strictly acc. to standard literature

- WO 90/027509, Vestas
  Method for assessment of a wind park site with respect to maintenance costs. The analysis is based on wind parameters (including statistical data from wind park maintenance).

- US 2002000723A
  Optimization of wind turbine operation based on measured data from a sensor system.
  Optimization is achieved via parameter settings modified according to actual wind speed.

- WO 09/016020A
  related to condition monitoring
  A signal is sent, if a gradient of a measured value exceed a pre-defined maximum.

- US 2005/090937A and US 2004/230377A
  related to SCADA architecture and real time monitoring

- JP 2004-150974A
  Monitoring and assessment of operation based on measurement of vibration

- US 2009/096406A, General Electric
  A method and system for determining the reliability and a remaining time before failure for a DC motor system is provided. The method and system may determine the reliability and a remaining time before failure with a statistical confidence. The method and system may include acquiring historical motor data, obtaining operational data, performing failure analysis, developing a causal network, and performing an integrated causal network and reliability analysis of the DC motor system

- US 2009/096405A, General Electric
A method and system for remotely predicting the reliability and the remaining time before failure for an AC motor system is provided. The method and system may remotely determine the reliability and a remaining time before failure with a statistical confidence utilizing an AC motor condition forecaster. The method and system may include acquiring historical motor data, obtaining operational data, performing failure analysis, developing a causal network, and performing an integrated causal network and reliability analysis of the AC motor system. The method and system may provide at least one notification of an issue with the AC motor system or at least one component of the AC motor system.

- US 2009/039650A, General Electric
Identification of results by combination of signals

- WO 09/075649 A, Vestas
Acquisition of wind turbine data for comparison and subsequent derivation of measures.

- US 2009/037206A, Caterpillar
A method of forecasting maintenance of a machine is disclosed. The method includes measuring a parameter of the machine, the parameter being indicative of a condition of the machine, and transferring the measured parameter to a maintenance planning system. The method also includes predicting two or more parameter variation curves indicating the variation of the parameter over time, each parameter variation curve representing values of the parameter at a different confidence level. The method further includes identifying a first time period for maintenance of the machine based on the two or more parameter variation curves.

- US 2004/030524A, US Dep. of Energy, Batelle Memorial Inst.
Methods and systems for analyzing the degradation and failure of mechanical systems
Methods and systems for identifying, understanding, and predicting the degradation and failure of mechanical systems are disclosed. The methods include measuring and quantifying stressors that are responsible for the activation of degradation mechanisms in the machine component of interest. The intensity of the stressor may be correlated with the rate of physical degradation according to some determinable function such that a derivative relationship exists between the machine performance, degradation, and the underlying stressor. The derivative relationship may be used to make diagnostic and prognostic calculations concerning the performance and projected life of the machine. These calculations may be performed in real time to allow the machine operator to quickly adjust the operational parameters of the machinery in order to help minimize or eliminate the effects of the degradation mechanism, thereby prolonging the life of the machine. Various systems implementing the methods are also disclosed.

- GB200807775 A0,
Methods for model-based diagnosis of gearbox

- US 2011/0018727 A1, Honeywell
A computer implemented method and system includes using information provided from sensors to monitor a wind turbine generator and provide signals representative of operation of the wind turbine generator, extracting signal level features from the signals, extracting model based features from the signals, calculating signal based conclusions, model based conclusions and spectral feature reinforcement based conclusions, and fusing the conclusions to provide a fault detection indication.

Other relevant examples from the prior art can be found in WO2011/054005 and in US2008/059840.

Shortcomings of current solutions

- Pre-defined hard coded alarm limits are of minor efficiency for detection of failure onset and precursors as

    ∘ they are set with respect to full load stationary operation. However, the majority of real operation time is in part load and does therefore not contribute to detection. Thus no robust result can be derived in reality.
    ∘ they are only upper or lower bounds for the corresponding observable. Time evolution of system behaviour and gradients of observables are not considered.
    ∘ they are not adapted to specifics of individual turbines (HS, SW), which results in extended bandwidths, i.e.

a reduction of the sensitivity to deviations and thus a reduction of pre-warning time

- The fraction of false alarms is high as

  ○ a result from scattering of measurement values and from scattering of individual turbine parameters (control settings).

  ○ the large fraction of healthy vs. faulty turbines leads to a large number of false errors, impairing the practical usability of such a system (Bayes consideration).

- Monitoring systems are built based on available data, i.e. without initial system analysis or target specification. This leads to only partial coverage of the availability and lifetime limiting risks (failure modes)

  ○ As there is no initial assessment of failure possibilities it is not evident, which of the relevant failure modes are detectable. Thus, some types of alarms are missing due to a lack of related observables or data analyses.

  ○ If pre-defined data are used as basis for a monitoring system the type and classification of data does not reflect failure modes, which impairs the possible result quality.

  ○ If the assessment is based on modelling of deviating system behaviour (as done by Cat and Smart Signal) this must be performed quantitatively correct (for amount of drift and for the kinetics) for all relevant failure modes. However for some of them verification is impossible (e.g. due to safety concerns, costs or system damage).

  ○ Additional sensors and instrumentation increase the technical complexity of the monitored system. Thus, reliability is possibly reduced. This trade-off is not quantified as the reference for assessment is missing.

  ○ In the scientific literature there are practically applicable damage models (based on observables on turbines) only for certain failure modes (aging, fatigue). Thus, preventive maintenance activities can be specified only for these particular cases, from which an overall increase of system-availability cannot be expected.

With these limitations in mind, it should be recognised that in many cases the available techniques for fault detection will unavoidably deliver a significant amount of false alarms. The introduction of any such system is associated with cost and effort, furthermore the false alarms themselves often result in significant effort since they must be investigated properly. Therefore given the choice of several such monitoring systems, each with its associated limitation in terms of a certain probability of false alarms, the task is to make a proper selection of monitoring techniques that nevertheless result in the target level of availability for the monitored system.

Approach:

The invention is defined in the appended claims.

Basic steps of the method of the invention are:

a. Obtaining physical data of the system recorded by measuring instruments which are relevant for status of the system;

b. Establishing an optimal time based service interval schedule in which service intervals are chosen so as to minimize expectation of downtime;

c. Calculating the expected downtime due to unplanned repair caused by different failure modes;

d. Establishing a condition based plan for repairing or replacing components of the system using the data of step a) in order to minimize downtime due to unplanned repair preferably under consideration of the ability to recognize a failure mode and the accuracy of this recognition quantified by false alarms probabilities.

In step a) preferably time series of physical data of the system are recorded by measuring instruments with a predefined first sampling rate.

Of course actual maintenance is conducted according to the above plan.

Typically step d) is performed as a loop in which failure modes are treated one by one, i.e. that condition based maintenance is introduced step by step. This is done as long as overall results are not satisfactory.

It is important to note, that condition based maintenance is not necessarily better than time based maintenance. At first it involves costs, but also if the quality of prediction is low, downtime may be greater due to false fault indications and not predicted actual faults, which will be explained later in detail.

A process to establish optimised preventive (condition based) maintenance of wind parks or similar complex technical systems is described. The activities aim at preventing faults due to all those failure modes, which are limiting the availability and lifetime of wind turbines acc. to expert reasoning.

The optimisation takes place in two main stages, in the first stage the time-based maintenance strategy is assessed and, where possible, improved by reassigning specific activities to the most appropriate maintenance intervals and possible redefining the intervals themselves. In the second stage failure modes are analysed individually in order to determine the extent to which the introduction of condition monitoring and subsequently condition based maintenance may be applied to improve the overall system availability.

During this procedure one failure mode after the other is chosen for introduction of condition monitoring and establishing a condition based plan starting from the one with greatest improvement of availability until an overall availability of the system is satisfying. Improvement of availability is the greater for each failure mode the longer the downtime is in case of failure and the more precise it is possible to predict failures by condition based maintenance.

Description of the procedure "Combined Maintenance Strategy"

1. Select the technical system consisting of defined components and sensors

In this step, the boundary conditions of the technical system to be monitored are defined. In particular, all sensors and data sources which are part of the standard setup of the system are identified.

The output of this step is a system description formulated as hierarchical tree of components interacting among each other, including a list of all - in general sensoric - data which are automatically generated when the system is in normal operation mode. The list of data contains a description of the data channels, sampling frequency, parsing interval, data format and location of data storage. 2. Set intended system lifetime and availability target

The intended system lifetime $\theta_L$ [h] is the period of useful life of the system to be monitored. The availability target $A_{TARG}$ for the system is given as the minimum proportion of the total operating time where the system needs to work as expected. Typically, it is given as percentage and evaluated per defined time periods, e.g., per month, quarter or year. 3. System failure potential defined?

When applying this new process to a complex system it can be the case that the failure potential for the system is already defined. E.g., a Failure Mode and Effect Analysis (FMEA) may have already been carried out in the context of past activities where all potential failure modes for the system have been identified.

If there is already sufficient information about the failure modes, this will be taken and integrated in the condition monitoring process. Otherwise the following steps (3.1 to 3.4) have to be carried out.

3.1 Classify all known failure modes

Each potential failure mode is classified with respect to its root cause component and described sufficiently. The output of this step is a list of $n_F$ failure modes with assignments to the root cause component (or subsystem), as well as damage indicators (measureable variables) and physical or stochastic damage models for each failure mode.

The identified failure modes are assumed to be independent of each other, i.e., the occurrence of one failure mode does not have any impact on the occurrence of any other failure modes. For cause-effect chains of failure modes, consequently only the root cause failure mode has to be considered here. Any consequential failures have to be considered in the downtime and costs of the root cause failure mode.

3.2 Setup system lifetime models for each failure mode

In the literature (references), the Weibull distribution is known as an appropriate model for the statistical description of the lifetime of technical systems. A Weibull distribution can be described by a shape parameter $\beta$ and a scale parameter $\eta$, where the shape parameter describes the change of the risk to fail over time and the scale parameter is the characteristic lifetime, i.e., the time until approx. 63% of the population fails. Experience has shown that the Weibull distribution is capable to model the lifetime behaviour for a wide range of different failure modes but parameters $\beta$ and $\eta$ may vary from failure mode to failure mode. Based on historic time-to-failure data for any failure mode i (i = 1, ..., $n_F$), the specific parameters $\beta_i$ and $\eta_i$ are estimated.

3.3 Define reliability metrics per failure mode

The historic time-to-failure and time-to-repair data are analysed separately for each failure mode $i = 1, ..., n_F$, and averaged over the defined time interval, e.g., month, quarter etc., to determine

- the failure rate $\lambda_i$, calculated as number of failures observed divided by total operation time in the time period. The failure rate is linked to the Weibull parameters $\beta_i$ and $\eta_i$ as the data basis for the calculation is the same for both cases, i.e., under assumption of constant failure rate over time it is $\lambda_i \approx 1 / MTTF_i$ with $MTTF_i = (\eta_i \Gamma(1 + 1 / \beta_i))$.

- the average downtime per failure $\tau_i$, defined as mean value of all specific time from failure-triggered shut-down until restart after problem fix. It is assumed that $\tau_i$ is substantially smaller than $MTTF_i$.

- the accuracy of the Weibull model, denoted as $\pi_i \in [0; 1]$ by application of the models defined in 3.2 on the historical data. The higher $\pi_i$, the more accurate the model.

Per failure mode, the down-time reduction potential is calculated as $\kappa_i = \lambda_i * \tau_i$.

3.4 Identify the most effective failure modes with respect to $\kappa_i / \pi_i$

The failure modes are sorted with respect to decreasing $\kappa^*_i = \kappa_i / \pi_i$. Thus, a bad model quality penalizes the effect of the failure mode on the availability. From the sorted list $\kappa^*_{(1)}, \kappa^*_{(2)}, ..., \kappa^*_{(r)}$ failure modes are removed as long as $\sum_{i>r} \kappa^*_{(i)} > (1 - A_{TARG})$. The remaining $n_F - r$ failure modes are those with the largest $\kappa$ values and most promising for increase of availability by application of optimized maintenance strategy. Subsequently they are referred to as high impact failure modes.

4. Reference maintenance plan including failure mode fix times defined?

If any reference maintenance plan for the high impact failure modes is available, it is used in the optimized maintenance strategy. Otherwise, the following steps (4.1 to 4.4) have to be carried out.

4.1 Identification of failure mode fix times

The following expected time values have to be identified for each high impact failure mode i. In contrary to $\tau_i$, these values provide case-specific details of the repair activities.

- The normal repair time tNRT,i is the time [h] which is usually required to fix the failure if it is detected during a planned maintenance service

- The unplanned repair time tURT,i [h] is the time which is usually required to fix the failure if it occurs unplanned

- The emergency response delay tERD,i [h] considers potential spare part order times or tool set-up times as well as the availability of service technicians

- The emergency access time tEAT,i [h] is time required to bring the technicians and tools to the asset location

Each repair action is assumed to be equal to a renewal of the complete system. I.e., after each repair, the system is assumed to perform as well as it would be new. In cases, where this renewal property is violated the characteristic lifetimes of the affected failure modes have to be shortened accordingly.

4.2 Determine optimal service intervals

For each of the high impact failure modes, the optimal service interval $\theta_i$ has to be determined. This is the time period where the sum of planned and unplanned downtime - which corresponds to the unavailability due to occurrence of failure mode i, $A_{SYS,i}$, - is at minimum.

4.3 Setup standard maintenance tasks

Set up a list of standard maintenance tasks $M_1, ..., M_m$ (replacement of gearbox lubricant, replacement of filters and seals, bolt torque measurements etc.) and assign to each high impact failure mode at least one maintenance task.

4.4 Define Service Interval Schedule

The service interval schedule is a plan with equally spaced intervals for maintenance activities.
The schedule is initialized with $\theta^*_1 = \min_i \theta_i$. This defines the interval width between two planned maintenance actions. For each of the high impact failure modes, the specific service interval $\theta^*_i$ is defined according to the following rules:

1. It must be a multiple of $\theta^*_1$.

2. It must be less than or equal to $\theta_i$.

5. Calculate the expected failure probability per failure mode

For each of the high impact failure modes, the expected failure probability $p_i$ is calculated. This is the evaluation of the cumulative distribution function of the Weibull distribution at the service time. I.e., $p_i = 1 - \exp(-(\theta^*_i / \eta_i)^{\beta_i}$. Due to the fact that the transformation $X^\beta$ of a Weibull distributed random variable ($X \sim Wb(\eta, \beta)$) follows an Exponential distribution with parameter $\eta^\beta$, the number of expected unplanned maintenance activities $n_{UPM}$ in the interval $\theta^*_i$ is estimated by $\theta^*_i / \eta^\beta$.

6. Predict the expected number of maintenance activities over life per failure mode

For each high impact failure mode, the number of maintenance activities due to the occurrence of any failure mode over the system lifetime $\theta_L$ is computed. For high impact failure mode i, the number of planned maintenance actions is the largest integer smaller than or equal to $\theta_L / \theta^*_i$. =: $n_{TBM,i}$ which is the total number of planned changes. The number of additionally unplanned changes is expected to be smaller than $(n_{TBM,i} + 1) * n_{UPM}$ so that the maximum number of changes according to failure mode i is $n_{TBM,i} + (n_{TBM,i} + 1) * n_{UPM}$. It is denoted as maximum number since in cases where an unplanned maintenance is close before a planned maintenance action then during the planned maintenance action the affected components won't be changed. In addition, the period from the last planned maintenance action to the end of life $\theta_L$ will in general be shorter than $\theta^*_i$.

7. Calculate the system's downtime over lifetime per failure mode

Per failure mode, each planned maintenance action is weighted with the normal repair time $t_{NRT}$ and for each unplanned repair, the unplanned repair time $t_{URT}$, the emergency response delay $t_{ERD}$ and the emergency access time $t_{EAT}$ are considered so that the total system's downtime over lifetime caused by failure mode i is $t_{DOWN,i} = n_{TBM,i} * t_{NRT,i} + n_{UPM} * (t_{URT,i} + t_{ERD,i} + t_{EAT,i})$.

8. Calculate overall system availability due to high impact failure modes

Although repair actions could be carried out in parallel - at least in the case of planned maintenance activities - in order to provide a conservative estimate it is assumed that they are carried out sequentially so that the system's downtime over lifetime per failure mode is calculated as $t_{DOWN} = \sum_i t_{DOWN,i}$. Consequently, the system availability is $A_{SYS} = (\theta_L * (1 - \sum_{i \leq r} \kappa_{(i)}) - t_{DOWN}) / \theta_L$.

9. Compare expected availability with availability target

If the availability after time-based optimisation is greater than the target, i.e, $A_{SYS} \geq A_{TARG}$ then the time-based maintenance strategy appears to be sufficient to reach the availability target.

9b. Check r value and consider further iteration of time based maintenance optimisation

Otherwise, a further optimisation should be attempted by considering additional failure modes (as long as they are available, i.e, r > 0) in the time-based maintenance optimisation. Note that in this additional optimisation iteration, the updated values of $\pi_i$ per failure mode should be considered. If r = 0 and still $A_{SYS} < A_{TARG}$ a selective introduction of a condition-based maintenance strategy is proposed.

10. Calculate the effect of unplanned occurrences of the high impact failure modes

To check for each high impact failure mode whether the time-based maintenance should be replaced by condition-based maintenance, calculate the effectiveness potential as $(\theta_L / MTTF_i) * (t_{URT,i} + t_{ERD,i} + t_{EAT,I} - t_{NRT})$.

11. Rank the high impact failure modes according to their effectiveness on the availability

Rank the high impact failure modes according to decreasing effectiveness potential and define the rank one failure mode as active failure mode for the set-up of the condition-based maintenance strategy.

12. Decide whether the active failure mode is suitable for condition-based maintenance

Not all of the high impact failure modes are suitable for condition-based maintenance. Failure modes are only suitable if the associated degradation phenomena can be detected with the (sensoric) data provided by the system and if appropriate physical or stochastic damage models exist to process these data and to compare the model output with a threshold value predicting the presence of the failure mode. The required measurement channels have been detected in step 3.1. If the system provides these channels and the prognostic horizon $\tau_{p,i}$, i.e., the time between reliable detection and occurrence of the active failure mode i is greater than $(t_{ERD},i + t_{EAT},i)$, then the active failure mode is suitable for condition based maintenance. Otherwise, select the failure mode with the next highest effectiveness rank and repeat this step. If no high impact failure mode is left, the procedure terminates here without reaching the availability target. Note: If condition-based maintenance cannot be applied to the active failure mode, set $\tau_{p,i} = 0$.

12.1 Statistical capability for active failure mode under condition-based maintenance

For the active failure mode i the prediction accuracy has to be assessed based on the probabilities defined in the following contingency table.

| Real Status Prediction: | Fault | Healthy | Total |
|---|---|---|---|
| Fault indicated | $p_{TP,i}$ | $p_{FP,i}$ | $p_{P.,i}$ |
| No fault indicated | $p_{FN,i}$ | $p_{TN,i}$ | $p_{N.,i}$ |
| Total | $p_i$ | $1- p_i$ | 1 |

The column sums $p_i = p_{TP,i} + p_{FP,i}$ and $(1 - p_i) = p_{TN,i} + p_{FN,i}$ are the down-time and the up-time proportions of the system with respect to the active failure mode i. In step 5., $p_i$ has been determined. In addition, proportion of false alarms, $p_{FP,i}, / (1 - p_i)$, can be determined by analysing historical alarm data. Because of $p_{P.,i} = p_{.TP,i} + p_{FP,i}$ and $p_{N.,i} = p_{FN,i} + p_{TN,i}$, the contingency table is completely defined by those four states. The indices TN, FN, FP, TN denote True Negative, False Negative, False Positive and True Negative states respectively.

12.2 Downtime for active failure mode under condition-based maintenance

The downtime for the occurrence of the active failure mode i under condition-based maintenance is derived from the following components:

| Prediction | Real Status | Time Component | Downtimes |
|---|---|---|---|
| Fault indicated | Fault | $t_{TP,i}$ | $t_{NRT,i}$ |
| Fault indicated | Healthy | $t_{FP,i}$ | $t_{EAT,i}$ |
| No fault indicated | Fault | $t_{FN,i}$ | $t_{URT,i} + t_{EAT,i} + t_{ERD,i}$ |
| No fault indicated | Healthy | $t_{TN,i}$ | 0 |

12.3 Calculate overall expected downtime for active failure mode

To determine the overall downtime for active failure mode when condition-based maintenance is applied instead of time-based maintenance, the number of expected failures over lifetime, $n_{CBM,i}$, is required. It is the smallest integer larger than or equal to $\theta_L$ / MTTF$_i$, where the Mean Time To Failure MTTF$_i$ = $(\eta_i \Gamma(1 + 1 / \beta_i))$.

For active failure mode i, occurring $n_{CBMi}$ times during intended system lifetime $\theta_L$, a new total down-time for the active failure mode is calculated:

$$t^*{}_{DOWN,i} = n_{CBM,i} * ((p_{TP,i} * t_{TP,i} + p_{FN,i} * t_{FN,i}) / p_i + p_{FP,i} * t_{FP,I} / (1 - p_i))$$

13. Decide whether the condition-based maintenance is effective

If the down-time under the condition-based maintenance $t^*{}_{DOWN,i}$ is greater than or equal to the corresponding down-time under the time-based maintenance $t_{DOWN,i}$, i.e., $t^*{}_{DOWN,i} \geq t_{DOWN,i}$ then the condition-based approach for the active failure mode i is ineffective and therefore rejected and the next high-impact failure is defined as new active failure mode. If there is no further high-impact failure mode, the process terminates without having reached the availability target.

Otherwise, if the condition-based maintenance is effective, i.e., $t^*{}_{DOWN,i} < t_{DOWN,i}$, then the overall availability $A_{SYS}$ is recalculated with $t^*{}_{DOWN,i}$ instead of $t_{DOWN,i}$. If $A_{SYS} \geq A_{TARG}$, the process can be terminated since the availability target will be reached. Otherwise, the next high-impact failure is defined as new active failure mode. If there is no further high-impact failure mode, the process terminates without having reached the availability target.

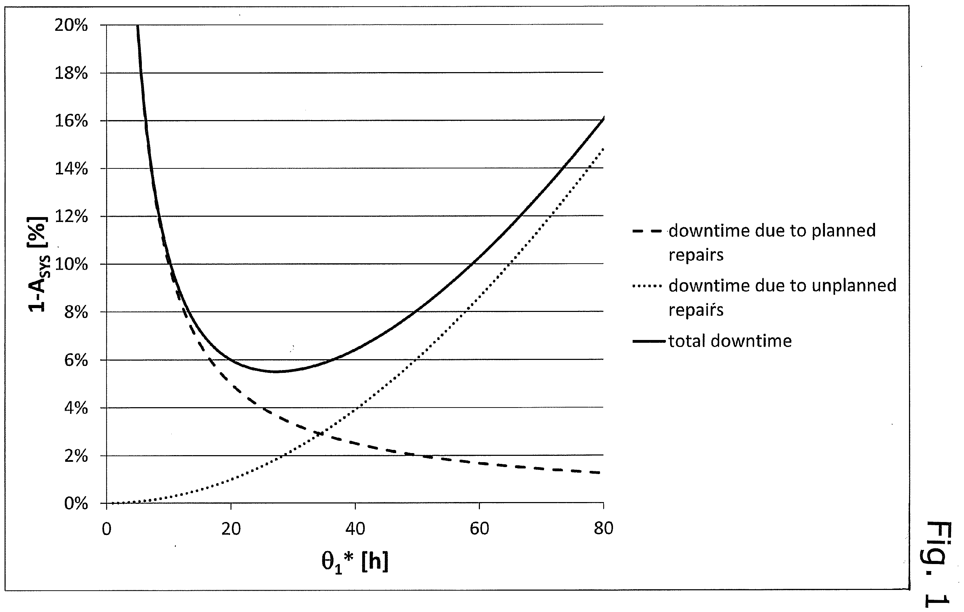

Fig. 1    shows in diagram percentage of downtime due to planned repairs versus downtime due to unplanned repairs as well as total downtime;

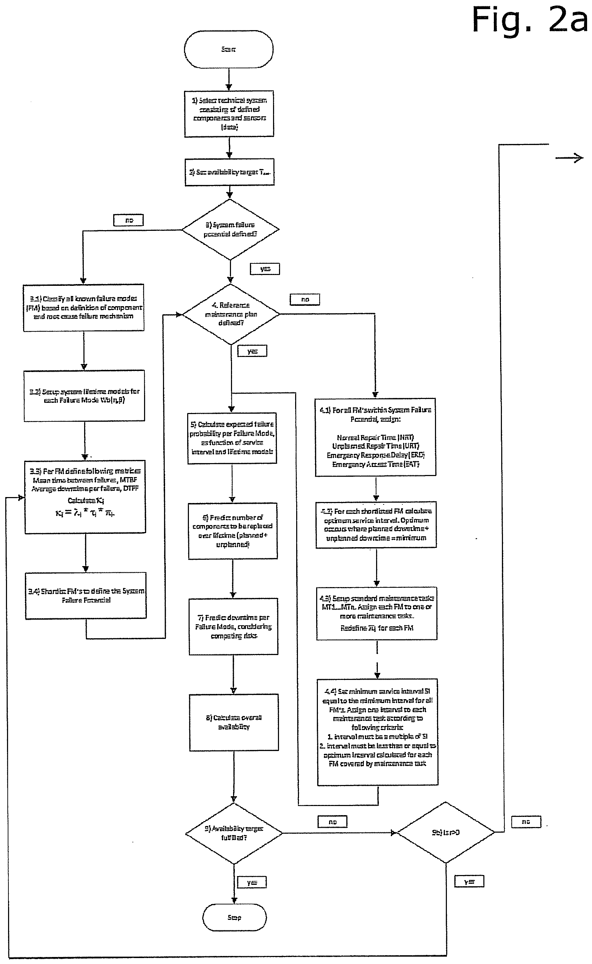

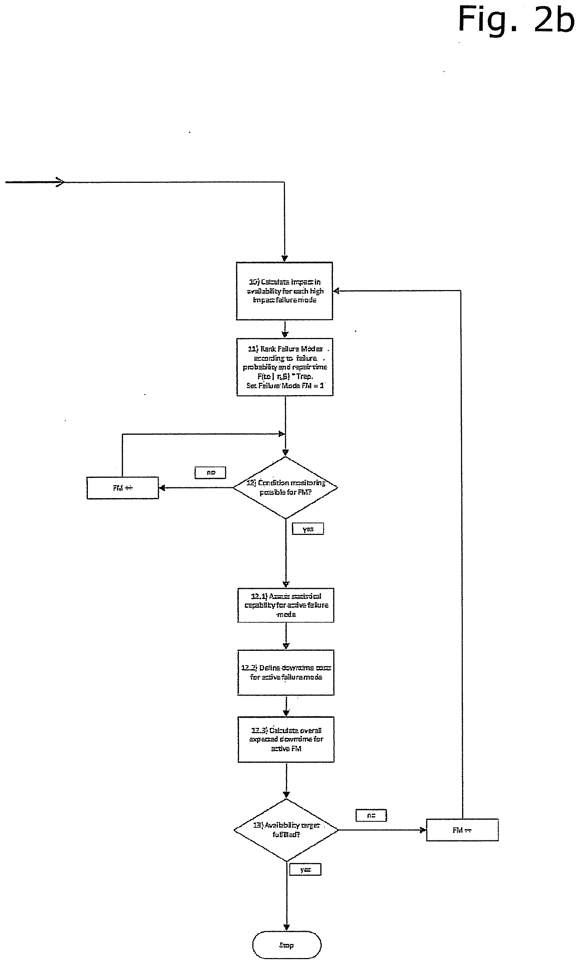

Fig. 2a    and Fig. 2b show a flow chart of a method of the present inventions;

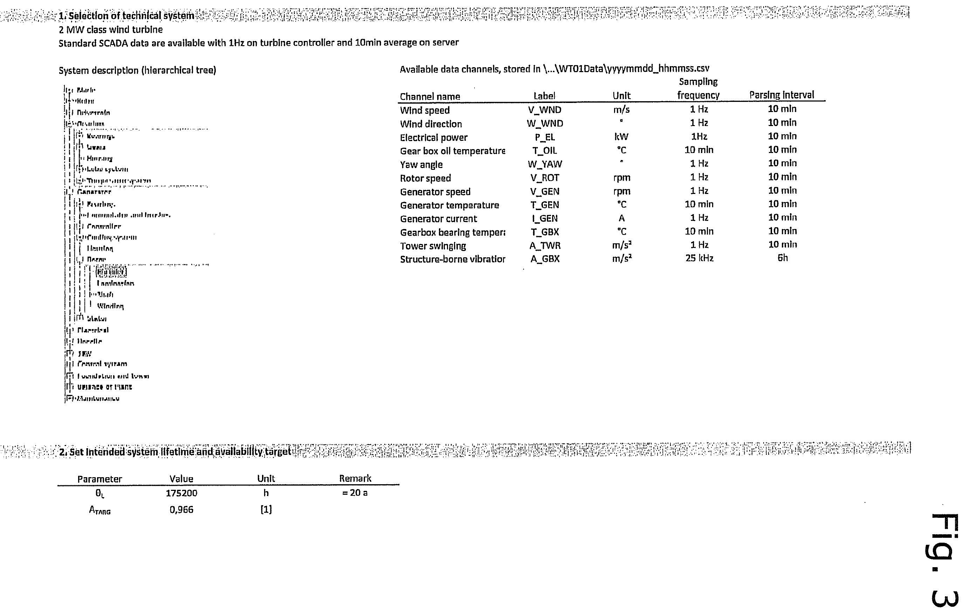

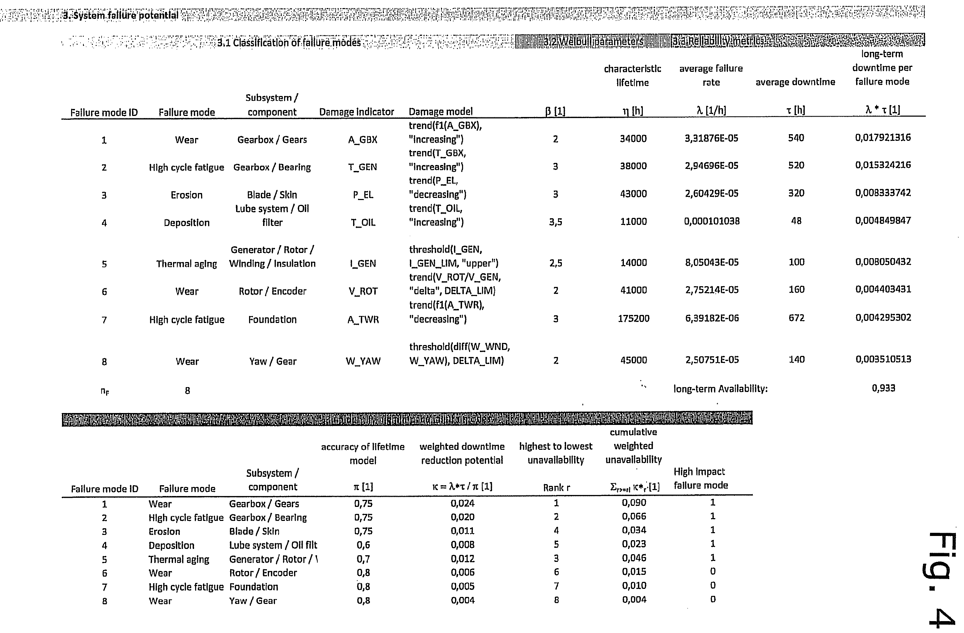

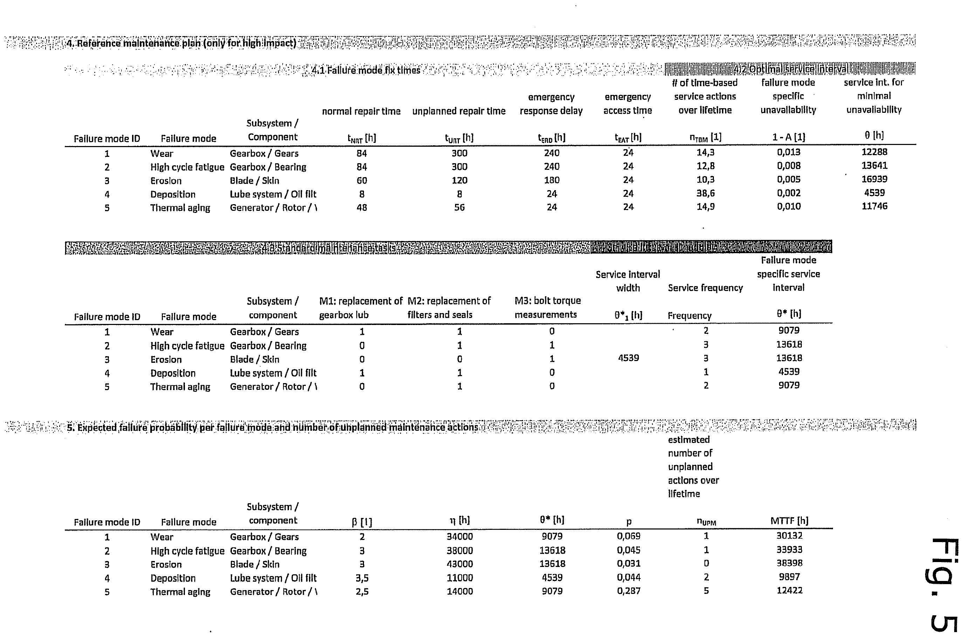

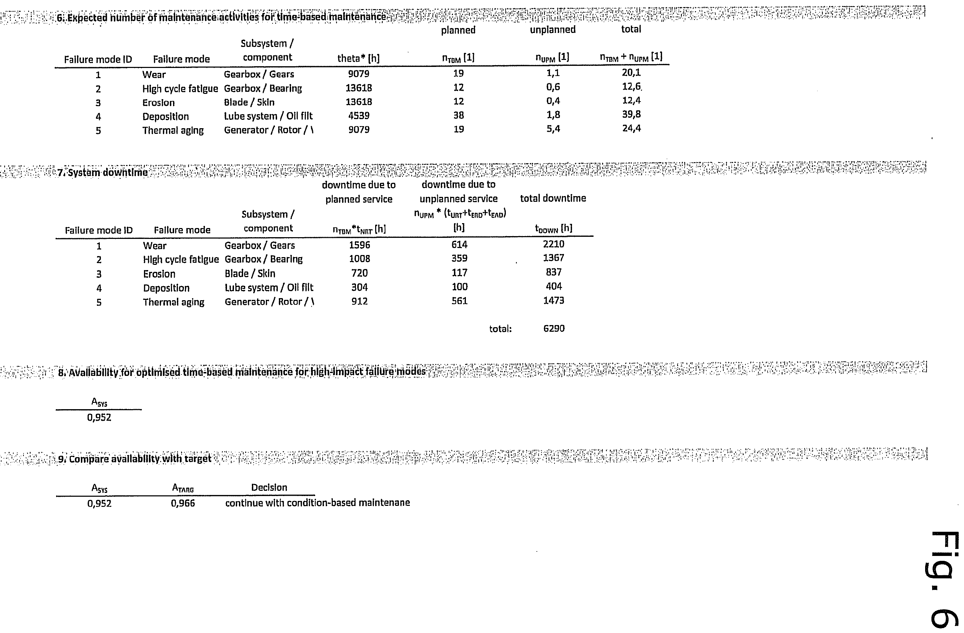

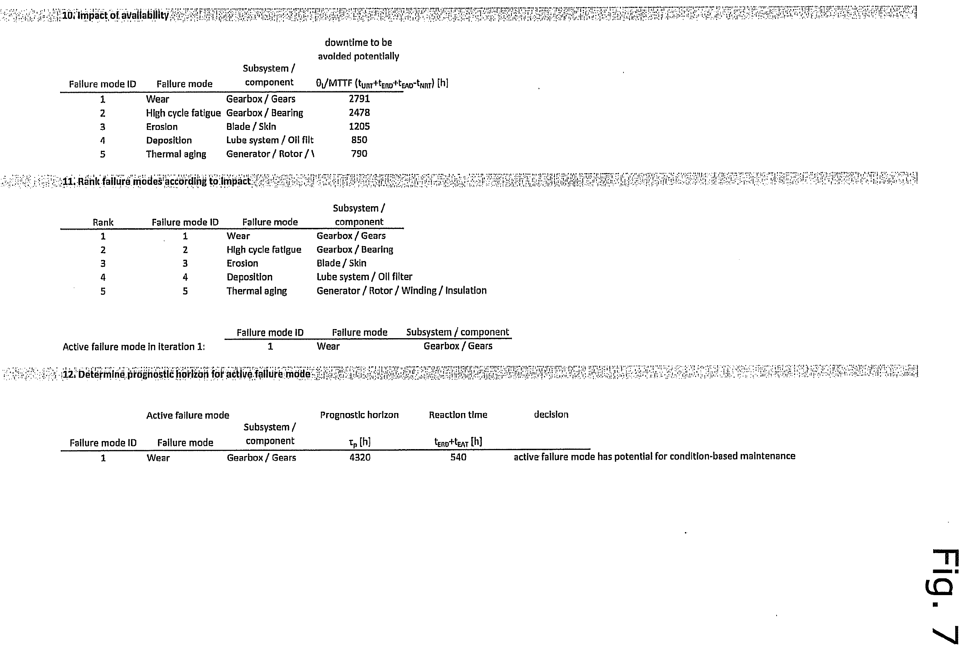

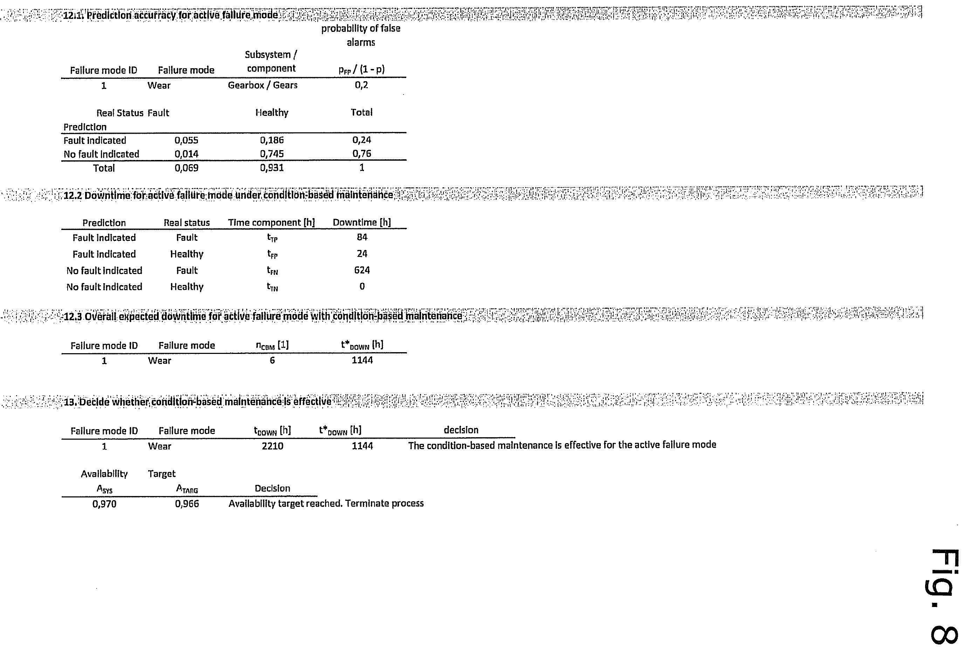

Fig. 3    to Fig. 8 show tables used in the method of the invention.

**Claims**

**1.** A method for maintaining complex systems, preferably wind turbines, comprising the following steps:

a. Obtaining physical data of the system recorded by measuring instruments which are relevant for the status of the system;
b. Establishing an optimal time based service interval schedule in which service intervals are chosen so as to minimize expectation of downtime;
c. Calculating the expected downtime due to unplanned repair caused by different failure modes, wherein failure modes are analyzed individually in order to determine the extent to which the possible introduction of condition monitoring and establishing a condition based plan for repairing or replacing components could improve availability of the system;
d. Establishing a condition based plan for repairing or replacing components of the system using the data of step a) in order to minimize downtime due to unplanned repair, wherein one failure mode after the other is chosen for introduction of condition monitoring and establishing a condition based plan starting from the one with greatest improvement of availability until an overall availability of the system is satisfactory.

**2.** The method of claim 1, wherein in step a) time series of physical data of the system are recorded by measuring instruments with a predefined first sampling rate.

**3.** The method of one of claims 1 or 2, wherein the Weibull distribution is used for statistical representation of lifetime models for each failure mode.

**4.** The method of one of claims 1 to 3, wherein

a. for each failure mode, the optimal service interval $\theta_i$, where unavailability due to occurrence of failure mode i is at minimum, is determined;
b. the minimum $\theta^*{}_1$ is determined, wherein the minimum $\theta^*{}_1$ is the minimum of all $\theta_i$;
c. high impact failure modes are identified, which are most promising for increase of availability by application of optimized maintenance strategy and wherein the specific service interval $\theta^*{}_i$ between two planned maintenance actions is chosen for each failure mode as a multiple of the minimum $\theta^*{}_1$ of the specific service intervals $\theta^*{}_i$ of the high impact failure modes which is less than or equal to the optimal service interval $\theta_i$ of the failure mode.

5. The method of one of claims 1 to 4, wherein the following input information is combined:

   a. systematically collected information about potential failure modes;
   b. corresponding lifetime models which allow the consideration of prior information about the risk to fail;
   c. boundary conditions of repair and maintenance actions.

6. The method of claim 5, wherein in addition values of a contingency table are considered in order to reflect the prediction accuracy with respect to a failure mode.

7. The method of one of claims 5 or 6, when these claims depend on claim 4, wherein boundary conditions of repair and maintenance actions are:

   - the normal repair time $t_{NRT.i.}$ that is the time which is usually required to fix the failure if it is detected during a planned maintenance service;
   - the unplanned repair time $t_{URT,i}$, that is the time which is usually required to fix the failure if it occurs unplanned;
   - the emergency response delay $t_{ERD,i}$, that considers potential spare part order times or tool set-up times as well as the availability of service technicians; and/or
   - the emergency access time $t_{EAT,i}$, that is time required to bring the technicians and tools to the asset location, wherein i represents the i-th high impact failure mode.

8. The method of one of claims 4 or claims 5-7, when these claims depend on claim 4, to 7, wherein step d comprises repeatedly a ranking of high impact failure modes according to their effectiveness on the availability and then deciding whether the active failure mode is suitable for condition-based maintenance.

**Patentansprüche**

1. Verfahren zum Warten von komplexen Systemen, vorzugsweise von Windturbinen, umfassend folgende Schritte:

   a. Erhalten von physikalischen Daten des Systems, die durch Messinstrumente aufgezeichnet werden und für den Status des Systems relevant sind;
   b. Einrichten eines optimalen zeitbasierten Dienstintervallzeitplans, in dem Dienstintervalle gewählt werden, um Ausfallzeiterwartung zu minimieren;
   c. Berechnen der erwarteten Ausfallzeit aufgrund nicht eingeplanter Reparatur, die durch verschiedene Fehlermodi bewirkt wird, wobei Fehlermodi individuell analysiert werden, um das Ausmaß zu bestimmen, in dem das mögliche Einrichten einer Zustandsüberwachung und Einrichten eines zustandsbasierten Plans zum Reparieren oder Ersetzen von Komponenten die Verfügbarkeit des Systems verbessern könnte;
   d. Einrichten eines zustandsbasierten Plans zum Reparieren oder Ersetzen von Komponenten des Systems unter Verwendung der Daten von Schritt a), um Ausfallzeit aufgrund nicht eingeplanter Reparatur zu minimieren, wobei ein Fehlermodus nach dem anderen zum Einleiten von Zustandsüberwachung und Einrichten eines zustandsbasierten Plans gewählt wird, beginnend mit jenem mit größter Verfügbarkeitsverbesserung, bis eine Gesamtverfügbarkeit des Systems zufriedenstellend ist.

2. Verfahren nach Anspruch 1, wobei in Schritt a) Zeitreihen von physikalischen Daten des Systems durch Messinstrumente mit einer vordefinierten ersten Abtastrate aufgezeichnet werden.

3. Verfahren nach einem der Ansprüche 1 oder 2, wobei die Weibull-Verteilung zur statistischen Darstellung von Lebenszeitmodellen für jeden Fehlermodus verwendet wird.

4. Verfahren nach einem der Ansprüche 1 bis 3, wobei:

   a. für jeden Fehlermodus der optimale Dienstintervall $\theta_i$, bei dem Nichtverfügbarkeit aufgrund des Auftretens von Fehlermodus i auf einem Minimum ist, bestimmt wird;
   b. das Minimum $\theta^*_1$ bestimmt wird, wobei das Minimum $\theta^*_1$ das Minimum aller $\theta_i$ ist;
   c. Fehlermodi mit hoher Auswirkung identifiziert werden, die am vielversprechendsten zur Erhöhung der Verfügbarkeit durch Anwendung von optimierter Wartungsstrategie sind, und wobei der spezifische Dienstintervall $\theta^*_i$ zwischen zwei geplanten Wartungstätigkeiten für jeden Fehlermodus als ein Mehrfaches des Minimums $\theta^*_1$ des spezifischen Dienstintervalls $\theta^*_i$ der Fehlermodi mit hoher Auswirkung gewählt wird, der geringer als der oder gleich dem optimalen Dienstintervall $\theta_i$ des Fehlermodus ist.

**5.** Verfahren nach einem der Ansprüche 1 bis 4, wobei die folgende Eingabeinformation kombiniert wird:

a. systematisch gesammelte Information über potentielle Fehlermodi;
b. entsprechende Lebenszeitmodelle, die die Berücksichtigung von früherer Information über das Fehlerrisiko ermöglichen;
c. Grenzbedingungen von Reparatur- und Wartungstätigkeiten.

**6.** Verfahren nach Anspruch 5, wobei zudem Werte einer Kontingenztabelle berücksichtigt werden, um die Voraussagegenauigkeit bezüglich eines Fehlermodus wiederzugeben.

**7.** Verfahren nach einem der Ansprüche 5 oder 6, wenn diese Ansprüche von Anspruch 4 abhängen, wobei Grenzbedingungen von Reparatur- und Wartungstätigkeiten folgende sind:

- die normale Reparaturzeit $t_{NRT,i}$, die die Zeit ist, die gewöhnlich zum Beheben des Fehlers erforderlich ist, wenn er während eines geplanten Wartungsdienstes erkannt wird;
- die nicht eingeplante Reparaturzeit $I_{URT,i}$, die die Zeit ist, die zum Beheben des Fehlers erforderlich ist, wenn er unplanmäßig auftritt;
- die Notreaktionsverzögerung $t_{ERD,i}$, die Ersatzteilbestellzeiten oder Werkzeugeinrichtungszeiten sowie die Verfügbarkeit von Wartungstechnikern berücksichtigt; und/oder
- die Notzugangszeit $t_{EAT,i}$, die die Zeit ist, die zum Herbeibefördern der Techniker und Werkzeuge zum Anlagenstandort erforderlich ist, wobei i den i-ten Fehlermodus mit hoher Auswirkung darstellt.

**8.** Verfahren nach einem der Ansprüche 4 oder 5 bis 7, wenn diese Ansprüche von Anspruch 4 abhängen, wobei Schritt d) wiederholt eine Rangfolge von Fehlermodi mit hoher Auswirkung gemäß ihrer Wirksamkeit auf die Verfügbarkeit umfasst, und dann Bestimmen, ob der aktive Fehlermodus für zustandsbasierte Wartung geeignet ist.

**Revendications**

**1.** Procédé pour la maintenance de systèmes complexes, de préférence d'éoliennes, comprenant les étapes suivantes :

a. l'obtention de données physiques du système, enregistrées par des instruments de mesure, lesquelles sont significatives pour l'état du système ;
b. l'établissement d'un calendrier d'intervalles de service basé sur le temps optimal où des intervalles de service sont choisis de manière à minimiser la probabilité de temps d'arrêt ;
c. le calcul du temps d'arrêt prévu en raison de réparations imprévues causées par différents modes de défaillance, dans lequel les modes de défaillance sont analysés individuellement afin de déterminer le degré selon lequel l'introduction possible d'une surveillance d'état et l'établissement d'un plan basé sur l'état pour réparer ou remplacer des composants pourrait améliorer la disponibilité du système ;
d. l'établissement d'un plan basé sur l'état pour réparer ou remplacer des composants du système en utilisant les données de l'étape a) afin de minimiser le temps d'arrêt dû à des réparations non planifiées, dans lequel un mode de défaillance après l'autre est choisi pour l'introduction d'une surveillance de l'état et l'établissement d'un plan basé sur l'état en commençant avec celui avec la meilleure amélioration de la disponibilité jusqu'à ce qu'une disponibilité globale du système soit satisfaisante.

**2.** Procédé selon la revendication 1, dans lequel, à l'étape a), des séries chronologiques de données physiques du système sont enregistrées par des instruments de mesure avec une première cadence d'échantillonnage prédéfinie.

**3.** Procédé selon l'une des revendications 1 ou 2, dans lequel la distribution de Weibull est utilisée pour la représentation statistique de modèles de durée de vie pour chaque mode de défaillance.

**4.** Procédé selon l'une des revendications 1 à 3, dans lequel

a. pour chaque mode de défaillance, l'intervalle de service optimal $\theta_i$ où l'indisponibilité due à l'apparition du mode de défaillance i est au minimum est déterminé ;
b. le minimum $\theta^*_1$ est déterminé, dans lequel le minimum $\theta^*_1$ est le minimum de tous les $\theta_1$ ;

c. des modes de défaillance à fort impact sont identifiés, lesquels sont les plus prometteurs pour l'augmentation de la disponibilité par application d'une stratégie de maintenance optimisée, et dans lequel l'intervalle de service spécifique $\theta^*_1$ entre deux actions de maintenance planifiées est choisi pour chaque mode de défaillance en tant que multiple du minimum $\theta^*_1$ des intervalles de service spécifiques $\theta^*_1$ des modes de défaillance à fort impact qui est inférieur ou égal à l'intervalle de service optimal $\theta_1$ du mode de défaillance.

**5.** Procédé selon l'une des revendications 1 à 4, dans lequel les informations d'entrée suivantes sont combinées :

a. des informations systématiquement collectées sur des modes de défaillance potentiels;
b. des modèles de durée de vie correspondants qui permettent la prise en compte d'informations antérieures sur le risque de défaillance ;
c. des conditions limites d'actions de réparation et de maintenance.

**6.** Procédé selon la revendication 5, dans lequel des valeurs d'un tableau de contingences sont prises en compte de manière supplémentaire afin de refléter la précision de prédiction par rapport à un mode de défaillance.

**7.** Procédé selon la revendication 5 ou 6 lorsque ces revendications dépendent de la revendication 4, dans lequel des conditions limites d'actions de réparation et de maintenance sont :

- le temps de réparation normal $t_{NRT.i.}$ qui est le temps généralement requis pour remédier à la défaillance si elle est détectée pendant un service de maintenance planifié ;
- le temps de réparation non planifié $t_{URT,i}$ qui est le temps généralement requis pour remédier à la défaillance si elle apparaît de manière non planifiée ;
- le délai d'intervention d'urgence $t_{ERD,i}$ qui tient compte des délais de commande potentiels de pièces de rechange ou des délais de mise en place d'outils ainsi que de la disponibilité des techniciens de service ; et/ou
- le temps d'accès en cas d'urgence $t_{EAT,i}$ qui est le temps requis pour amener les techniciens et outils à l'emplacement des actifs, dans lequel i représente le i-ème mode de défaillance à fort impact.

**8.** Procédé selon l'une des revendications 4 ou revendications 5-7 lorsque ces revendications dépendant de la revendication 4, dans lequel l'étape d comprend une hiérarchisation de manière répétée de modes de défaillance à fort impact en fonction de leur effet sur la disponibilité, et ensuite la décision si le mode de défaillance actif convient pour une maintenance basée sur l'état.

## Fig. 1

# Fig. 2a

Start

1) Select technical system consisting of defined components and sensors (data)

2) Set availability target $T_{av}$

3) System failure potential defined?

no → 

3.1) Classify all known failure modes (FM) based on definition of component and root cause failure mechanism

3.2) Setup system lifetime models for each Failure Mode Wb($\eta,\beta$)

3.3) Per FM define following metrics
Mean time between failures, MTBF
Average downtime per failure, DTPF
Calculate $K_i$
$$K_i = \lambda_i * \tau_i * \pi_+$$

3.4) Shortlist FM's to define the System Failure Potential

yes →

4. Reference maintenance plan defined?

no →

yes →

5) Calculate expected failure probability per Failure Mode, as function of service interval and lifetime models

6) Predict number of components to be replaced over lifetime (planned + unplanned)

7) Predict downtime per Failure Mode, considering competing risks

8) Calculate overall availability

4.1) For all FM's within System Failure Potential, assign:
Normal Repair Time (NRT)
Unplanned Repair Time (URT)
Emergency Response Delay (ERD)
Emergency Access Time (EAT)

4.2) For each shortlisted FM calculate optimum service interval. Optimum occurs where planned downtime + unplanned downtime = minimum

4.3) Setup standard maintenance tasks MT1...MTn. Assign each FM to one or more maintenance tasks.
Redefine $\pi_i$ for each FM

4.4) Set minimum service interval SI equal to the minimum interval for all FM's. Assign one interval to each maintenance task according to following criteria:
1. interval must be a multiple of SI
2. interval must be less than or equal to optimum interval calculated for each FM covered by maintenance task

9) Availability target fulfilled?

no → 9b) Is r>0?

no →

yes →

yes →

Stop

14

# Fig. 2b

EP 2 837 984 B1

**1. Selection of technical system**

2 MW class wind turbine

Standard SCADA data are available with 1Hz on turbine controller and 10min average on server

System description (hierarchical tree)

```
Main
  Rotor
  Drivetrain
  Gearbox
    Bearings
    Gears
    Housing
    Lube system
    Temperature sys...
  Generator
    Bearing
    Commutator and brushes
    Controller
    Cooling system
    Housing
    Rotor
      Brushes
      Lamination
      Shaft
      Winding
    Stator
  Electrical
  Nacelle
  Yaw
  Control system
  Foundation and tower
  Balance of plant
Maintenance
```

Available data channels, stored in \...\WT01Data\yyyymmdd_hhmmss.csv

| Channel name | Label | Unit | Sampling frequency | Parsing interval |
|---|---|---|---|---|
| Wind speed | V_WND | m/s | 1 Hz | 10 min |
| Wind direction | W_WND | ° | 1 Hz | 10 min |
| Electrical power | P_EL | kW | 1Hz | 10 min |
| Gear box oil temperature | T_OIL | °C | 10 min | 10 min |
| Yaw angle | W_YAW | ° | 1 Hz | 10 min |
| Rotor speed | V_ROT | rpm | 1 Hz | 10 min |
| Generator speed | V_GEN | rpm | 1 Hz | 10 min |
| Generator temperature | T_GEN | °C | 10 min | 10 min |
| Generator current | I_GEN | A | 1 Hz | 10 min |
| Gearbox bearing tempera | T_GBX | °C | 10 min | 10 min |
| Tower swinging | A_TWR | m/s² | 1 Hz | 10 min |
| Structure-borne vibration | A_GBX | m/s² | 25 kHz | 6h |

**2. Set intended system lifetime and availability target**

| Parameter | Value | Unit | Remark |
|---|---|---|---|
| $\theta_L$ | 175200 | h | = 20 a |
| $A_{TARG}$ | 0,966 | [1] | |

**Fig. 3**

**3. System failure potential**

| | | | | | | | 3.1 Classification of failure modes | | 3.2 Weibull parameters | | 3.3 Reliability methods | | |
|---|---|---|---|---|---|---|---|---|---|---|---|---|---|

| Failure mode ID | Failure mode | Subsystem / component | Damage indicator | Damage model | β [1] | characteristic lifetime η [h] | average failure rate λ [1/h] | average downtime τ [h] | long-term downtime per failure mode λ * τ [1] |
|---|---|---|---|---|---|---|---|---|---|
| 1 | Wear | Gearbox / Gears | A_GBX | trend(f1(A_GBX), "increasing") | 2 | 34000 | 3,31876E-05 | 540 | 0,017921316 |
| 2 | High cycle fatigue | Gearbox / Bearing | T_GEN | trend(T_GBX, "increasing") | 3 | 38000 | 2,94696E-05 | 520 | 0,015324216 |
| 3 | Erosion | Blade / Skin | P_EL | trend(P_EL, "decreasing") | 3 | 43000 | 2,60429E-05 | 320 | 0,008333742 |
| 4 | Deposition | Lube system / Oil filter | T_OIL | trend(T_OIL, "increasing") | 3,5 | 11000 | 0,000101038 | 48 | 0,004849847 |
| 5 | Thermal aging | Generator / Rotor / Winding / Insulation | I_GEN | threshold(I_GEN, I_GEN_LIM, "upper") | 2,5 | 14000 | 8,05043E-05 | 100 | 0,008050432 |
| 6 | Wear | Rotor / Encoder | V_ROT | trend(V_ROT/V_GEN, "delta", DELTA_LIM) | 2 | 41000 | 2,75214E-05 | 160 | 0,004403431 |
| 7 | High cycle fatigue | Foundation | A_TWR | trend(f1(A_TWR), "decreasing") | 3 | 175200 | 6,39182E-06 | 672 | 0,004295302 |
| 8 | Wear | Yaw / Gear | W_YAW | threshold(diff(W_WND, W_YAW), DELTA_LIM) | 2 | 45000 | 2,50751E-05 | 140 | 0,003510513 |
| $n_F$ | 8 | | | | | | long-term Availability: | | 0,933 |

| Failure mode ID | Failure mode | Subsystem / component | accuracy of lifetime model $\pi$ [1] | weighted downtime reduction potential $\kappa = \lambda*\tau / \pi$ [1] | highest to lowest unavailability Rank r | cumulative weighted unavailability $\Sigma_{r>=r} \kappa*_r$ [1] | High impact failure mode |
|---|---|---|---|---|---|---|---|
| 1 | Wear | Gearbox / Gears | 0,75 | 0,024 | 1 | 0,090 | 1 |
| 2 | High cycle fatigue | Gearbox / Bearing | 0,75 | 0,020 | 2 | 0,066 | 1 |
| 3 | Erosion | Blade / Skin | 0,75 | 0,011 | 4 | 0,034 | 1 |
| 4 | Deposition | Lube system / Oil filt | 0,6 | 0,008 | 5 | 0,023 | 1 |
| 5 | Thermal aging | Generator / Rotor / \ | 0,7 | 0,012 | 3 | 0,046 | 1 |
| 6 | Wear | Rotor / Encoder | 0,8 | 0,006 | 6 | 0,015 | 0 |
| 7 | High cycle fatigue | Foundation | 0,8 | 0,005 | 7 | 0,010 | 0 |
| 8 | Wear | Yaw / Gear | 0,8 | 0,004 | 8 | 0,004 | 0 |

**Fig. 4**

### 4.1 Failure mode fix times / 4.2 Optimal service interval

| Failure mode ID | Failure mode | Subsystem / Component | normal repair time $t_{NRT}$ [h] | unplanned repair time $t_{URT}$ [h] | emergency response delay $t_{ERD}$ [h] | emergency access time $t_{EAT}$ [h] | # of time-based service actions over lifetime $n_{TBM}$ [1] | failure mode specific unavailability 1 - A [1] | service int. for minimal unavailability $\theta$ [h] |
|---|---|---|---|---|---|---|---|---|---|
| 1 | Wear | Gearbox / Gears | 84 | 300 | 240 | 24 | 14,3 | 0,013 | 12288 |
| 2 | High cycle fatigue | Gearbox / Bearing | 84 | 300 | 240 | 24 | 12,8 | 0,008 | 13641 |
| 3 | Erosion | Blade / Skin | 60 | 120 | 180 | 24 | 10,3 | 0,005 | 16939 |
| 4 | Deposition | Lube system / Oil filt | 8 | 8 | 24 | 24 | 38,6 | 0,002 | 4539 |
| 5 | Thermal aging | Generator / Rotor / \ | 48 | 56 | 24 | 24 | 14,9 | 0,010 | 11746 |

### 4.3 Standard maintenance tasks

| Failure mode ID | Failure mode | Subsystem / component | M1: replacement of gearbox lub | M2: replacement of filters and seals | M3: bolt torque measurements | Service interval width $\theta*_1$ [h] | Service frequency Frequency | Failure mode specific service interval $\theta*$ [h] |
|---|---|---|---|---|---|---|---|---|
| 1 | Wear | Gearbox / Gears | 1 | 1 | 0 | | 2 | 9079 |
| 2 | High cycle fatigue | Gearbox / Bearing | 0 | 1 | 1 | | 3 | 13618 |
| 3 | Erosion | Blade / Skin | 0 | 0 | 1 | 4539 | 3 | 13618 |
| 4 | Deposition | Lube system / Oil filt | 1 | 1 | 0 | | 1 | 4539 |
| 5 | Thermal aging | Generator / Rotor / \ | 0 | 1 | 0 | | 2 | 9079 |

| Failure mode ID | Failure mode | Subsystem / component | $\beta$ [1] | $\eta$ [h] | $\theta*$ [h] | p | estimated number of unplanned actions over lifetime $n_{UPM}$ | MTTF [h] |
|---|---|---|---|---|---|---|---|---|
| 1 | Wear | Gearbox / Gears | 2 | 34000 | 9079 | 0,069 | 1 | 30132 |
| 2 | High cycle fatigue | Gearbox / Bearing | 3 | 38000 | 13618 | 0,045 | 1 | 33933 |
| 3 | Erosion | Blade / Skin | 3 | 43000 | 13618 | 0,031 | 0 | 38398 |
| 4 | Deposition | Lube system / Oil filt | 3,5 | 11000 | 4539 | 0,044 | 2 | 9897 |
| 5 | Thermal aging | Generator / Rotor / \ | 2,5 | 14000 | 9079 | 0,287 | 5 | 12422 |

Fig. 5

EP 2 837 984 B1

### 6. Expected number of maintenance activities for time-based maintenance

| Failure mode ID | Failure mode | Subsystem / component | theta* [h] | planned $n_{TBM}$ [1] | unplanned $n_{UPM}$ [1] | total $n_{TBM} + n_{UPM}$ [1] |
|---|---|---|---|---|---|---|
| 1 | Wear | Gearbox / Gears | 9079 | 19 | 1,1 | 20,1 |
| 2 | High cycle fatigue | Gearbox / Bearing | 13618 | 12 | 0,6 | 12,6 |
| 3 | Erosion | Blade / Skin | 13618 | 12 | 0,4 | 12,4 |
| 4 | Deposition | Lube system / Oil filt | 4539 | 38 | 1,8 | 39,8 |
| 5 | Thermal aging | Generator / Rotor / \ | 9079 | 19 | 5,4 | 24,4 |

### 7. System downtime

| Failure mode ID | Failure mode | Subsystem / component | downtime due to planned service $n_{TBM}*t_{NRT}$ [h] | downtime due to unplanned service $n_{UPM} * (t_{URT}+t_{ERD}+t_{EAD})$ [h] | total downtime $t_{DOWN}$ [h] |
|---|---|---|---|---|---|
| 1 | Wear | Gearbox / Gears | 1596 | 614 | 2210 |
| 2 | High cycle fatigue | Gearbox / Bearing | 1008 | 359 | 1367 |
| 3 | Erosion | Blade / Skin | 720 | 117 | 837 |
| 4 | Deposition | Lube system / Oil filt | 304 | 100 | 404 |
| 5 | Thermal aging | Generator / Rotor / \ | 912 | 561 | 1473 |
| | | | | total: | 6290 |

### 8. Availability for optimised time-based maintenance for high-impact failure modes

| $A_{SYS}$ |
|---|
| 0,952 |

### 9. Compare availability with target

| $A_{SYS}$ | $A_{TARG}$ | Decision |
|---|---|---|
| 0,952 | 0,966 | continue with condition-based maintenane |

Fig. 6

| Failure mode ID | Failure mode | Subsystem / component | downtime to be avoided potentially $\theta_L$/MTTF ($t_{URT}+t_{ERD}+t_{EAD}-t_{NRT}$) [h] |
|---|---|---|---|
| 1 | Wear | Gearbox / Gears | 2791 |
| 2 | High cycle fatigue | Gearbox / Bearing | 2478 |
| 3 | Erosion | Blade / Skin | 1205 |
| 4 | Deposition | Lube system / Oil filt | 850 |
| 5 | Thermal aging | Generator / Rotor / \ | 790 |

| Rank | Failure mode ID | Failure mode | Subsystem / component |
|---|---|---|---|
| 1 | 1 | Wear | Gearbox / Gears |
| 2 | 2 | High cycle fatigue | Gearbox / Bearing |
| 3 | 3 | Erosion | Blade / Skin |
| 4 | 4 | Deposition | Lube system / Oil filter |
| 5 | 5 | Thermal aging | Generator / Rotor / Winding / Insulation |

| | Failure mode ID | Failure mode | Subsystem / component |
|---|---|---|---|
| Active failure mode in iteration 1: | 1 | Wear | Gearbox / Gears |

| Failure mode ID | Failure mode | Subsystem / component | Prognostic horizon $\tau_p$ [h] | Reaction time $t_{ERD}+t_{EAT}$ [h] | decision |
|---|---|---|---|---|---|
| 1 | Wear | Gearbox / Gears | 4320 | 540 | active failure mode has potential for condition-based maintenance |

EP 2 837 984 B1

Fig. 7

**12.1. Prediction accuracy for active failure mode**

| Failure mode ID | Failure mode | Subsystem / component | probability of false alarms $p_{FP} / (1 - p)$ |
|---|---|---|---|
| 1 | Wear | Gearbox / Gears | 0,2 |

| Real Status Prediction | Fault | Healthy | Total |
|---|---|---|---|
| Fault indicated | 0,055 | 0,186 | 0,24 |
| No fault indicated | 0,014 | 0,745 | 0,76 |
| Total | 0,069 | 0,931 | 1 |

**12.2 Downtime for active failure mode under condition-based maintenance**

| Prediction | Real status | Time component [h] | Downtime [h] |
|---|---|---|---|
| Fault indicated | Fault | $t_{TP}$ | 84 |
| Fault indicated | Healthy | $t_{FP}$ | 24 |
| No fault indicated | Fault | $t_{FN}$ | 624 |
| No fault indicated | Healthy | $t_{TN}$ | 0 |

**12.3 Overall expected downtime for active failure mode with condition-based maintenance**

| Failure mode ID | Failure mode | $n_{CBM}$ [1] | $t^*_{DOWN}$ [h] |
|---|---|---|---|
| 1 | Wear | 6 | 1144 |

**13. Decide whether condition-based maintenance is effective**

| Failure mode ID | Failure mode | $t_{DOWN}$ [h] | $t^*_{DOWN}$ [h] | decision |
|---|---|---|---|---|
| 1 | Wear | 2210 | 1144 | The condition-based maintenance is effective for the active failure mode |

| Availability $A_{SYS}$ | Target $A_{TARG}$ | Decision |
|---|---|---|
| 0,970 | 0,966 | Availability target reached. Terminate process |

Fig. 8

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 08043762 A
- WO 09053365 A
- WO 90027509 A
- US 2002000723 A
- WO 09016020A A
- US 2005090937 A
- US 2004230377 A
- JP 2004150974 A
- US 2009096406 A
- US 2009096405 A
- US 2009039650 A
- WO 09075649 A
- US 2009037206 A
- US 2004030524 A
- GB 200807775 A0
- US 20110018727 A1
- WO 2011054005 A
- US 2008059840 A